Europäisches Patentamt

European Patent Office

Office européen des brevets

(11) Publication number: **0 139 317**
**A2**

(12) # EUROPEAN PATENT APPLICATION

(21) Application number: **84201218.9**

(22) Date of filing: **23.08.84**

(51) Int. Cl.⁴: **G 01 N 29/04**

(30) Priority: **26.08.83 NL 8302988**

(43) Date of publication of application:
**02.05.85 Bulletin 85/18**

(84) Designated Contracting States:
**AT BE CH DE FR GB IT LI LU NL SE**

(71) Applicant: **DOW CHEMICAL (NEDERLAND) B.V.**
**Herbert H. Dowweg 4**
**Terneuzen(NL)**

(72) Inventor: **Franken, Ferdinand Maria Joseph**
**Hoofdplaatseweg 13**
**NL-4521 GJ Biervliet(NL)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **Apparatus and method for the non-destructive inspection of solid bodies.**

(57) The non-destructive testing of solid bodies is conducted by generating transverse, ultrasonic surface waves in the solid body being inspected, said surface waves having sufficiently different frequencies such that they travel through the body being inspected at different depths; receiving at least a part of the reflected portion, if any, of the surface waves, the reflected portion consisting of at least two surfaces waves having sufficiently different frequencies such that these waves travelled at distinctly different depths through the solid body and filtering and measuring or analyzing the reflected portion of the surface waves to determine if a defect or discontinuity exists in the solid body and the depth or severity of the defect or discontinuity.

The apparatus for conducting said non-destructive testing comprises a means for generating the ultrasonic surface waves; a means for receiving at least a part of the reflected portion, if any, of the surface waves and a detector means for measuring or analyzing the reflected portion of the surface wave.

EP 0 139 317 A2

./...

FIG.1

Apparatus and method for the non-destructive inspection of solid bodies.

The present invention relates to an apparatus and method for the non-destructive inspection of a solid body, and, more particularly, to an apparatus and method which employ ultrasonic waves to inspect a solid body for corrosion or other defects.

It is often desirable to inspect a solid using non-destructive testing techniques in order to predict and prevent the complete failure of the solid during its use. For example, in the operation of a shell and tube or similar type heat exchanger, it is generally desirable to periodically inspect the tube walls for pitting or other defects which are often caused, or at least assisted, by the corrosive liquid(s) flowing through the tube and/or shell portions of the heat exchanger. If not previously detected and repaired, such pitting or other defects often propogate through the entire tube wall, thereby causing the undesirable mixture of the fluids flowing through the tube and shell portions of the heat exchanger.

Heretofore, various methods and apparatus have been proposed to inspect a solid for imperfections. For example, due to the different electrical properties exhibited by a solid material and any imperfection existing therein, electrical means such as eddy current techniques have been employed to detect defects in the surface of the solid. Unfortunately, the described methods are not suitably employed for detecting defects within the interior of the solid or the shell side of the tubes in a shell and tube heat exchanger. Similar disadvantages exist with the photographic techniques such as described in US patent 4,249,810. In addition, the stray flux techniques which use a magnetic field to inspect a solid body can only be employed in detecting defects on the inside of a tubing.

Alternative methods and apparatus for inspecting a solid body employ ultrasonic waves and pulse-echo techniques. For example, in one such method, an ultrasonic wave is transmitted normal, i.e. perpendicular, to the entrance surface of the body being tested and any reflected wave received and measured. Although such techniques can effectively determine the thickness of the solid body being tested, the described techniques cannot detect small defects or corroded portions of the body or distinguish between a defect and other anomalies such as welded joints and irregular surfaces.

Another apparatus for detecting defects, e.g., hairline cracks, at shallow depths in solid bodies such as railways is disclosed in US patent 3,251,220. Said apparatus comprises a means for generating pulses of ultrasonic waves in the solid and a means for receiving at least some of the reflected portion of the generated waves. The described apparatus cannot, however, be successfully employed in the inspection of    thin-walled tubing. Specifically, in the inspection of thin-walled tubing using the apparatus and method described, small defects are only identified with difficulty, and small defects are not readily distinguished from large defects. Moreover, the exact location of the defect in the body being inspected cannot be precisely determined using said apparatus.

In view of deficiencies in the apparatus and methods heretofore employed in inspecting a solid body for defects, it would be highly desirable to provide an apparatus and method capable of detecting and indicating the severity of a defect which exists in a solid body, which method and apparatus can be effectively employed in the inspection of the shell side of a thin-walled tube of a shell and tube heat exchanger.

Accordingly, in one aspect, the present invention provides an apparatus for inspecting a solid. Said apparatus comprises a means for generating transverse surface waves in the solid at sufficiently different frequencies such that the surface waves generated travel at different depths through the solid being inspected and a means capable of receiving at least a part of the reflected portion of surface waves. To determine if any defects exist in the body and the severity thereof, the apparatus includes a detector means capable of measuring or analyzing the reflected portion of the surface waves, said measured portion consisting of the reflected portion, if any, of at least two surface waves having sufficiently different and distinct frequencies such that the reflected portions, if any, of these waves indicate the depth and/or severity of any defect or discontinuity in the solid body.

In another aspect, the present invention provides a method of inspecting a solid. The method comprises the steps of generating transverse surface waves in the material to be inspected, said surface waves having sufficiently different frequencies such that they travel at different depths through the material being inspected; receiving at least a part of the reflected portion, if any, of surface waves, the reflected portion consisting of at least two surface waves having sufficiently different frequencies such that these surface waves travelled at distinctly different depths through the solid; and filtering and measuring or analyzing the reflected portion of the surface waves to determine if a defect or discontinuity exists in the solid body and the depth or severity of said defect or discontinuity.

The apparatus and method of the present invention are unique in that defects as small as 0.3 mm can be detected in a thin, solid body, e.g., a body having a thickness of up to 5 mm, and the severity of said defects measured without having direct physical contact with the surface in which the defect exists. For example, the apparatus and method are particularly suitable for inspecting the outer side of thin-walled tubing such as the shell side of tubing used in a shell-and-tube heat exchanger without having physical access thereto. Therefore, tedious and laborious inspection techniques, e.g., visual inspection, are effectively eliminated. Moreover, small or hairline cracks are immediately and accurately detected by the apparatus and method of the present invention.

In a particularly preferred embodiment, the apparatus is a means for inspecting the outer surface of tubing such as the thin-walled tubing of a shell-and-tube heat exchanger. The apparatus comprises a transducer means capable of generating, at spaced intervals, pulses of ultrasonic surface waves having different frequencies over essentially the complete circumference of the tubing while continuously travelling through the interior of the tubing being inspected; a detector means, which may or may not be the transducer means, capable of receiving at least a part of the reflected portions of surface waves; and a detector means for measuring the reflected portion, if any, of said waves; the measured portion consisting of at least two surface waves having sufficiently different and distinct frequencies such that the depth and/or severity of any defect or discontinuity in the tubing is determined.

In operation, the transducer means travels through the interior of the tubing while generating pulses of an ultrasonic surface wave and receiving the reflected portions thereof under conditions such that the location and/or the severity of the defect or discontinuity can be detected. In a preferred embodiment, the transducer means comprises a rotably mounted crystal and the crystal is continuously rotated as it travels through the interior of the tubing.

The invention will now be described in more detail with reference to the accompanying drawings, in which:

Fig. 1 is a schematic representation, partly in cross-section, of an embodiment of the present invention;

Fig. 2 is a graphical representation of the reflected waves of a highly damped transducer with the filtered portions thereof being indicated;

Fig. 3 is a schematic representation, partly in cross-section, of a preferred embodiment of the present invention useful in inspecting thin-walled tubing commonly employed in shell-and-tube heat exchangers;

Fig. 4 is a schematic representation, partly in cross-section, of an especially preferred apparatus of the present invention particularly useful for inspecting both the inner and outer surfaces of tubing such as the shell and tube sides of the tubing in a shell-and-tube heat exchanger.

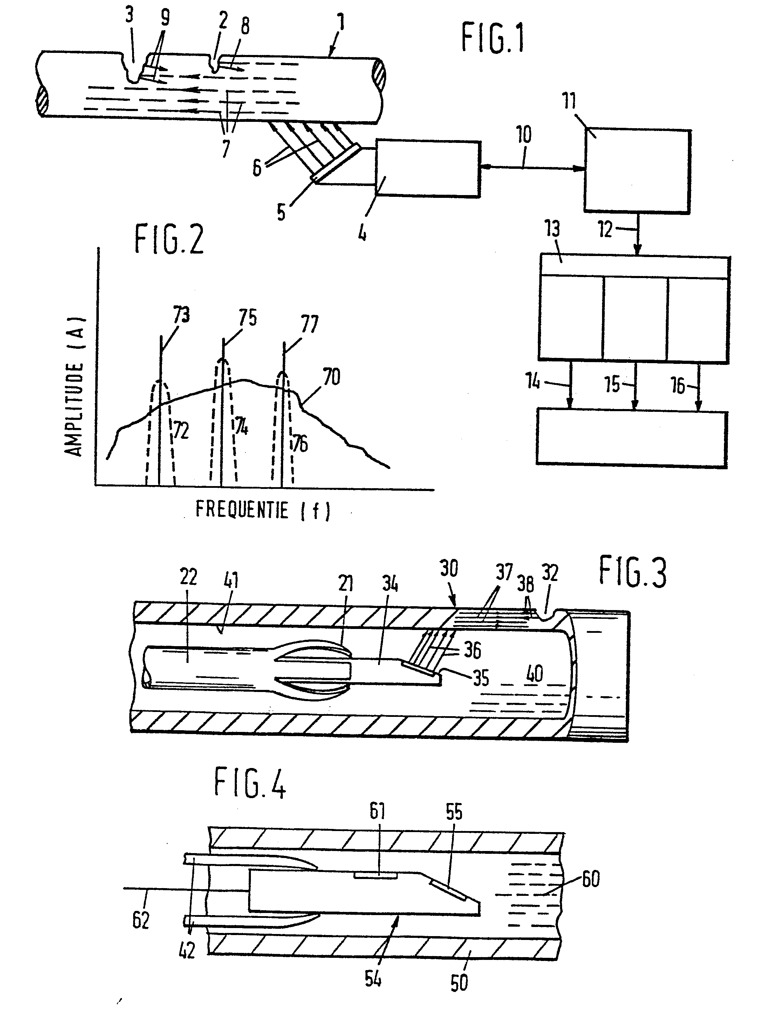

Referring more particularly to the drawings, Fig. 1, which represents an embodiment of the present invention, depicts a solid or essentially solid body 1 having a defect 2 and a comparatively larger defect 3. A transducer means 4 has a crystal 5 capable of generating longitudinal ultrasonic waves 6 of a plurality of different frequencies.

The crystal 5 and solid body 1 are positioned at an angle such that the ultrasonic waves 6 impinging on solid body 1 generate transverse, ultrasonic surface waves travelling through the solid body 1.

As used herein, the term "surface wave" means a wave which travels parallel to the surface of the body being inspected, i.e., the angle of incidence is such that the wave travels at an essentially constant depth relative to the surface of the solid body. To generate surface waves, the angle of incidence of the crystal with respect to the solid body is dependent on the material of construction of the body and the medium through which the waves travel prior to impinging on said body. As an example, when this material is water and the body is constructed of carbon steel, the angle of incidence is 27.5°. In this invention, the different frequencies of the longitudinal, ultrasonic waves generated by crystal 5 are selected such that the generated surface waves 7 travel at different depths through solid body 1. Specifically, the surface waves of higher frequencies travel near the surface of initial wave penetration only whereas the surface waves of lower frequencies penetrate more deeply into the solid body and travel up to nearer the surface opposite to that of initial wave penetration. (For example, a range of frequencies can be selected such that the generated surface waves travel through the entire body being inspected). Any defect or other discontinuity existing in solid body 1 will reflect at least a portion of the surface waves 7 striking or impinging upon said defect or discontinuity. Transducer means 4 receives, as an echo, at least a portion of these reflected waves. This echo received by the transducer will contain those frequencies of the initially generated surface waves which have been reflected by any defect or other discontinuity in the solid body being inspected.

A measurable signal, e.g., an electrical voltage which corresponds to the frequencies of the waves being received by the transducer means 4 is transmitted to a receiver/pulser means 11 by lead 10. The received signal is transmitted by lead 12 to filter means 13 which is capable of filtering the signal representing the broad bands of reflected waves into separate signals representing the reflected portions of at least two surface waves having sufficiently different frequencies such that the reflected waves correspond to surface waves which travel at distinctly different depths through the solid body 1. In the illustrated embodiment, the filter means have been selected so that signals representing surface waves of three distinct frequencies are filtered and separated. The separated signals of the distinct surface waves are supplied by means of leads 14, 15 and 16 to recorder or analyzer means 17.

In operation, the receiver/pulser means 11 produces an electrical signal, at certain intervals, which is passed by means of lead 10 to transducer means 4. The pulse signal causes crystal 5 to produce ultrasonic, longitudinal waves 6 of different frequencies. The transducer means 4 is placed at an angle to the solid body 1 such that the ultrasonic, longitudinal wave 6 impinging on solid body 1 generates only surface waves 7 (i.e., essentially no shear waves are generated). Due to their different frequencies, the generated surface waves 7 travel at different depths through the solid. Specifically, the depth of penetration is inversely proportional to the frequency of the ultrasonic, surface waves; with the waves having the higher frequencies travelling nearer the surface of penetration and the waves having the lower frequencies penetrating more deeply into the solid body and travelling through the solid body more closely to the surface opposite that of initial wave penetration. As the generated surface waves 7 travel through the solid body 1, a portion of those waves which impinge or strike a defect or other discontinuity in the solid are reflected by said defect or discontinuity. The frequencies of the reflected waves are essentially identical to frequencies of the surface waves being reflected and will therefore indicate the depth and/or severity of the defect or other discontinuity in the solid body. Specifically, a small defect such as the defect 2 in solid body 1 will reflect only those surface waves having a frequency sufficiently low to travel near the surface opposite that of the penetration of the waves in the solid body. On the other hand, a more severe defect such as the defect 3 in the solid body 1 will reflect surface waves having a low frequency as well as surface waves having a comparably higher frequency.

The reflected portion of the surface waves travelling through the body 1 are received by the transducer means 4 and a measurable signal, e.g. an electrical voltage, corresponding to the character, e.g., the frequency and amplitude, of these reflected waves, is transmitted to the receiver/pulser means 11 by means of line 10. From receiver/pulser means 11, the signal is fed by means of line 12 to filter means 13. In filter means 13, the signal corresponding to the broad band of reflected waves is filtered into separate signals corresponding to the reflected portion of at least two waves having sufficiently different frequencies so that they travel at distinctly different depths through the solid body being inspected. Although in the practice of the present method and apparatus, it is only necessary to filter the signal representing the broad band of reflected waves into separate signals corresponding to reflected waves of two different frequencies, it is generally advantageous to filter the broad signal into three separate signals corresponding to reflected portions of three waves having separate and different frequencies. Specifically, in the illustrated embodiment, signals corresponding to the reflected portion of a surface wave having a relatively low frequency such that it travels up to and through the solid body near the surface opposite to wave penetration, further a surface wave having a comparably high frequency such that it travels nearer the surface of initial penetration, and a surface wave having a medium frequency such that it travels essentially through the solid body up to a depth between those of the waves first mentioned are filtered and separated from the remainder of the signal corresponding to the broad band of reflected surface waves received by transducer 5. In such a manner, the presence and/or absence of a defect at a particular depth in the solid body is indicated.

Fig. 2 is a graphical representation of the amplitude plotted against the frequency of a typical wave generated by the transducer means 4 and the portions of said waves which are to be filtered. Specifically, curve 70 represents the broad band of the initial wave generated by the transducer means 4. The frequencies indicated by lines 73, 75 and 77 are sufficiently different, so that the ultrasonic waves having these frequencies travel at distinctly different depths through the solid body being inspected. The dotted curves 72, 74 and 76 represent the band of frequencies to be filtered. Reflected waves having frequencies within the designated bands will indicate the severity and/or the location of the detected defect.

Specifically, if there is no defect or other discontinuity existing in the outer portion of the tube wall, there will be essentially no reflected waves, thereby indicating that there are no defects in the solid body. On the other hand, generated surface waves of low frequencies which are reflected by a small defect will be indicated within the band of frequencies 72 which corresponds to the reflected portions of waves having a lower frequency. Defects of relatively greater severity, however, will also reflect waves of relatively higher frequencies which are indicated by the presence of a signal within the band of frequencies 74. A defect of yet greater severity will also reflect waves of even higher frequencies which are indicated by a signal corresponding to the band of frequencies 76. By periodically inspecting the solid, the propagation and/or growth of a shallow defect in the tube can be noted over extended periods of operation.

In a typical operation of the apparatus depicted in Fig. 1, the entire solid body is inspected continuously by continuously moving the transducer means 4 over the surface of the solid body 1 while continuously, at spaced intervals, generating pulses of ultrasonic waves and receiving the reflected portions of these generated waves. In this continuous operation, the time interval established for receiving the reflected waves is advantageously gated so as to omit the undesirable portion of the reflected waves.

In a preferred embodiment, the apparatus and method are employed for the inspection of thin-walled tubing such as that found in a shell-and-tube type heat exchanger. The apparatus and method are particularly useful in inspecting for defects or other discontinuities on the shell side of the tubing. Such preferred embodiment is represented schematically in Fig. 3, which depicts a thin-walled tube 30 having a defect 32 therein. A transducer means 34 provided with a crystal 35 is rotably mounted on a hollow rod or cylinder 22 using clips and/or fingers 21. Leads for connecting the transducer means with the pulser/ receiver means (not shown) extend through this hollow cylinder. The transducer means 34 and crystal 35, in combination with said pulser/ receiver means, are capable of producing, at spaced intervals, an ultrasonic wave having different frequencies. The frequencies of longitudinal, ultrasonic waves and the position (i.e., angle) of crystal 35 in relation to the tube wall are such that upon the impingement of the longitudinal ultrasonic waves 36 generated by the crystal 35 on the inner surface of tube 30, transverse surface waves 37 are generated at various depths throughout the tube wall. The tube is often and preferably filled with an acoustical conductive liquid 40 such as water to improve the coupling (i.e., the propagation of the waves) between the transducer surface and the inner surface of the tubing.

In operation, the crystal 35 transmits, at spaced intervals, a longitudinal wave 36 of different frequencies to the inner surface 41 of tube or pipe 30. The angle of the crystal 35, in relation to the wall of the tube or pipe 30, is such that this longitudinal wave 36 generates ultrasonic transverse surface waves 37 of different frequencies within the wall of tubing 30. The different frequencies of the surface waves generated by wave 36 are selected so that these generated surface waves travel through the tube at different depths. At least a portion of the surface waves striking or impinging upon defect 32 are reflected thereby. These reflected waves are subsequently received by transducer means 34, which transmits a measurable signal, e.g., an electric voltage, corresponding to the characteristics of the reflected waves to the pulser/receiver means for subsequent filtering into separate signals corresponding to at least two waves of sufficiently different frequencies, so that the location and/or severity of a defect in the shell side of the tubing can be detected. Subsequent analysis of the separated signals indicates the presence of a defect, if any, and its severity and/or location.

In the operation described wherein the outer portion of the tubing is inspected for defects, while the transducer means is travelling through the interior of the tubing, the transducer means is continuously rotated, while generating, at spaced intervals, pulses of ultrasonic waves, and receiving, at spaced intervals, the reflected portions thereof. As previously mentioned, the interval for receiving the reflected signal is preferably gated to eliminate the undesirable portion of the reflected wave. The speed at which the transducer means travels through the tubing, the rotational speed of the transducer and the spaced intervals for the pulse and reception of the ultrasonic waves are interrelated and established so that any defect or discontinuity in the tubing can be detected and its severity and/or position indicated. In general, to accurately locate and determine the severity of any defect or other discontinuity, the ultrasonic, surface waves of at least five, preferably ten, individual pulses are reflected by the defect or other discontinuity. The speed of the transducer means through the tubing, the speed of rotation, the spaced intervals for pulsing and receiving the ultrasonic waves and the gating of these intervals are set accordingly.

These will vary depending on a variety of factors including the liquid acoustical means employed, if present, and the construction of the material of the tubing, rotational speeds and pulse/receive cycle times most advantageously employed for tubing of different wall thicknesses and/or interior diameters can be readily determined by those skilled in the art by conventional practice supplemented by using simple, experimental techniques.

Fig. 4 depicts an alternative and preferred embodiment wherein defects of both the outer and the inner surface of the tubing can be detected. In this embodiment, a wave generating means 54 is disposed within a thin-walled tube 50. The wave generating means is rotably mounted by means of fingers or clips 42 and is connected to a pulser/receiver means (not shown) by means of a lead 62. Conduit or tube 50 is filled with water 60 or other acoustical intensifying liquid. Wave generating means 54 comprises a crystal 55 for producing longitudinal, ultrasonic waves which impinge on the interior surface and are transmitted as surface waves through the walls of conduit 50 at different depths, and a means 61 for measuring the wall thickness of the tube and/or defects on the inside of the tube, such as an eddy current generating means or a means for generating ultrasonic waves normal to the tube surface.

Most preferable is the use of the apparatus in combination with an eddy current generating means and a means for generating longitudinal waves through the solid body, normal to the surface of wave penetration. In this manner, the wall thickness and any larger areas of erosion and/or pitting can be determined in addition to inspecting the inner and outer (i.e., shell side) portions of the tube for defects.

In operation, any defects of the outer or shell side of conduit 50 are detected by the techniques hereinbefore described by measuring and analyzing the reflected portion of the ultrasonic waves generated by crystal 55 and travelling as surface waves through tubing 50. Defects which are located on the inner side of the tube can be determined by conventional techniques using means 61. Such techniques are well-known in the art, so that reference can be made thereto.

With regard to the various components useful in the embodiments described, the transducer means, including the crystal and the pulser/receiver means are preferably components capable of generating longitudinal ultrasonic waves of the desired frequencies at spaced intervals and receiving, at spaced intervals, the reflected portions of said waves. By the term "ultrasonic" are meant sound vibrations beyond the audible frequency. The term "longitudinal" is used conventionally herein and refers generally to waves in which the particles of the medium through which the wave travels move in the same direction as the wave. The desired frequencies used in the application of the method and apparatus are dependent on the body being tested and the desired depths at which the transverse surface waves generated by the longitudinal waves travel through said body. The term "transverse" is used conventionally herein and refers generally to waves wherein the particle of the medium moves perpendicular to the direction of wave movement. As an example, in the inspection of a thin-walled, carbon steel tube having a wall thickness from 2 to 4 mm, transverse ultrasonic waves exhibiting a frequency 1-4 MHz, which travel through the body at a velocity of approximately 3300 m/s are employed. In general, frequencies are selected so that surface waves are generated throughout the entire depth of the body being inspected, the severity and/or location being determined by properly selecting the frequencies to be filtered. Inspection of thicker or thinner bodies and/or inspection at different depths through the body is readily achieved using ultrasonic waves of different frequencies or changing the selected frequencies being filtered.

In general, the pulses of ultrasonic waves from the pulser/ receiver unit are in the form of an electrical signal having a predetermined frequency which will generally range between 1 MHz up to and exceeding 20 MHz. The output terminal of the pulser/receiver means is coupled with the transducer means by a transmission line such as a flexible coaxial cable. Mercury or other conductive fluid is advantageously employed to make the necessary electrical contact between the transducer means and the cable when the transducer means is rotably mounted such as depicted in the devices illustrated in Figs. 3 and 4. The transducer preferably comprises a dampened and electronically matched crystal. Although the transducer, including the crystal, can be of any of a variety of different materials, in general, it is an electrical acoustical device such as a piezoelectric cyrstal, capacitor or laser. Alternatively, a magnetostrictive transducer can be employed. To most effectively concentrate the generated ultrasonic energy as surface waves in the tube or other material being tested, a focussed probe is often advantageously employed as the transducer means. The transducer means is also capable of receiving the reflected portions of the generated surface waves and returning the electrical signal generated by these reflected waves to the receiver/pulser means.

Although the transducer and the pulser/receiver means are indicated as two units in the drawings, a single unit comprising the transducer and pulser/receiver means can be employed as a wave generating means. Similarly, a transducer means can be employed exclusively to generate the pulses of ultrasonic waves and a separate transducer means employed to receive the reflected portions of said generated waves. Such modifications and/or variations in the transducer and receiver/pulses means are well-known in the art, so that reference can be made thereto.

The filter means is suitably any means capable of filtering and separating the broad signal corresponding to the reflected waves into separate signals corresponding to waves having sufficiently different frequencies or wavelengths such that the waves travel at distinctly different depths through the solid body being inspected. The desired frequencies of the separated waves will vary depending on a variety of factors including the solid body being inspected and its thickness. For example, in the inspection of thin-walled tubing as described above, the filter means advantageously filters the signal corresponding to the reflected portions of the generated ultrasonic waves and separates it into bands having mean frequencies of 1, 2 and 3 MHz. In other operations, the desired wavelengths to be filtered and separated are selected accordingly.

The analyzer means is suitably any means capable of receiving and measuring the filtered signals of the ultrasonic waves. Although the response can be indicated visually such as on a CRT, or the data registered on a strip chart, a computer is advantageously employed for the analysis. Devices conventionally employed for such purposes are suitable for use in the practice of the method and apparatus. Advantageously, the detectors used are sensitive to small changes in electrical currents.

0139317

## CLAIMS

1. Apparatus for inspecting a solid body, characterized by a means for generating transverse surface waves in the solid body, which surface waves have sufficiently different frequencies such that they travel through the solid at different depths; a means capable of receiving at least a part of the reflected portion of said surface waves; and a detector means capable of measuring or analyzing the reflected portion of the surface waves, said measured portion consisting of the reflected portion, if any, of at least two surface waves having sufficiently different and distinct frequencies such that the reflected portion, if any, of these waves indicates the depth and/or severity of any defect or discontinuity in the solid body.

2. Apparatus according to claim 1, characterized in that the transverse surface waves are generated by a transducer means capable of generating longitudinal ultrasonic waves of a plurality of different frequencies, said transducer means being positioned so that longitudinal waves impinging on the surface of the solid body generate transverse ultrasonic surface waves travelling through the body at different depths.

3. Apparatus according to claim 2, characterized in that the receiving means is capable of generating a measurable signal corresponding to the broad band of reflected waves.

4. Apparatus according to claim 3, characterized in that the detector means comprises a filter means capable of filtering the signal representing the broad band of reflected waves, if any, generated by the receiving means, into separate signals representing the reflected portion of at least two different frequencies sufficiently different so that the reflected waves correspond to surface waves which travel at distinctly different depths through the solid body being inspected.

5. Apparatus according to claim 4, characterized in that the detector means further comprises a computing means for analyzing the separate signals representing the filtered portion of the reflected waves.

6. Apparatus for inspecting the outer surface of a thin-walled tube of a shell-and-tube heat exchanger, characterized by a transducer means capable of generating, at spaced intervals, pulses of transverse, ultrasonic surface waves having different frequencies over essentially the entire circumference of the tube material while continuously moving through the interior of the tube being inspected; by a detector means, which may or may not be the transducer means, and is capable of receiving at least a part of the reflected portions of surface waves; and by a detector means for measuring the reflected portions of said waves, the measured portion consisting of at least two surface waves having sufficiently different and distinct frequencies so that the depth and/or severity of any defect or discontinuity in the tube can be determined.

7. Apparatus according to claim 6, characterized in that the transducer means comprises a rotably mounted crystal which is capable of being continuously rotated as it is travelling through the interior of the tube.

8. A method for inspecting a solid body for defects or discontinuities existing therein, characterized by the steps of generating ultrasonic surface waves in the solid body, said surface waves having sufficiently different frequencies such that they travel

0139317

through the solid body at different depths, receiving at least part of the reflected portion of the surface waves, said measured part of the reflected portion of the surface waves consisting of at least two surface waves having sufficiently different frequencies such that these surface waves travelled through the solid body at distinctly different depths; and measuring or analyzing the reflected portion of the surface waves to determine if a defect or discontinuity exist in the solid body and the depth or severity of said defect or discontinuity.

9.        A method according to claim 8, characterized in that the solid body is a tube and the method is employed to inspect the outer surface for defects or discontinuities.

FIG.1

FIG.2

AMPLITUDE (A)

FREQUENTIE (f)

FIG.3

FIG.4